(19) Europäisches Patentamt / European Patent Office / Office européen des brevets

(11) **EP 4 670 836 A1**

(12) **EUROPEAN PATENT APPLICATION**
published in accordance with Art. 153(4) EPC

(43) Date of publication:
**31.12.2025   Bulletin 2026/01**

(21) Application number: 24760560.3

(22) Date of filing: **21.02.2024**

(51) International Patent Classification (IPC):
*B01J 19/00* (2006.01)   *B01J 19/18* (2006.01)
*C01G 53/00* (2025.01)   *H01M 4/525* (2010.01)
*H01M 4/131* (2010.01)   *H01M 4/02* (2006.01)

(52) Cooperative Patent Classification (CPC):
Y02E 60/10

(86) International application number:
**PCT/KR2024/002238**

(87) International publication number:
**WO 2024/177371 (29.08.2024 Gazette 2024/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **22.02.2023   KR 20230023439**

(71) Applicant: Posco Future M Co., Ltd.
**Pohang-si, Gyeongsangbuk-do 37918 (KR)**

(72) Inventors:
• **KIM, Jaehan**
  **Gumi-si, Gyeongsangbuk-do 39171 (KR)**

• **CHOI, Seung Un**
  **Gumi-si, Gyeongsangbuk-do 39171 (KR)**
• **NAM, Gyeong Won**
  **Gumi-si, Gyeongsangbuk-do 39171 (KR)**
• **JUNG, Kwang Eun**
  **Gumi-si, Gyeongsangbuk-do 39171 (KR)**
• **JEUNG, Do Gak**
  **Gumi-si, Gyeongsangbuk-do 39171 (KR)**

(74) Representative: **Meissner Bolte Partnerschaft
mbB
Patentanwälte Rechtsanwälte
Postfach 86 06 24
81633 München (DE)**

(54) **APPARATUS AND METHOD FOR MANUFACTURING POSITIVE ELECTRODE ACTIVE MATERIAL PRECURSOR**

(57)   The embodiments may include an apparatus and a method for manufacturing a positive electrode active material precursor. An apparatus for manufacturing a positive electrode active material precursor according to one embodiment may include: a reaction unit (100) comprising a first reactor (110), an input pipe (120) configured to supply a raw material into the first reactor, and a first stirring means (130) located at the center inside the first reactor and configured to stir the raw material introduced from the input pipe to perform a coprecipitation reaction; a first connection pipe (300) through which a reaction product generated in the first reactor is discharged; a solid-liquid separation unit (200) comprising a second reactor (210), a second stirring means (230) located at the center inside the second reactor and configured to stir the reaction product introduced from the first connection pipe, and a filtrate discharge section (220) located at an upper portion of the second reactor; and a control unit connected to the reaction unit and the solid-liquid separation unit and configured to control the reaction unit and the solid-liquid separation unit to operate continuously.

[Fig. 1]

Description

[TECHNICAL FIELD]

The embodiments described herein relate to an apparatus and a method for manufacturing a positive electrode active material precursor.

[BACKGROUND]

With the increasing demand for small electronic devices such as smartphones, notebook computers, and tablet PCs, as well as the recent growth in demand for electric vehicles and medium- to large-scale energy storage systems, the demand for secondary batteries capable of storing electrical energy has been rising sharply. In particular, lithium secondary batteries, which exhibit high energy density and operating voltage, long cycle life, and low self-discharge rate, are widely used.

Among the components of such lithium secondary batteries, the positive electrode active material is manufactured from a positive electrode material prepared using a precursor produced from various types of metal oxides containing elements such as nickel, cobalt, and manganese.

Various methods for manufacturing the positive electrode active material have been proposed, but coprecipitation, which uses multi-component metal salts containing nickel, cobalt, and manganese as starting materials, has been utilized as the most economical and practical method.

In addition, apparatuses of a batch type for producing a precursor using the coprecipitation method are known. In such batch-type apparatuses, the time required to fill the reaction volume with the input source-referred to as one RT-is 20 hours or more, and, based on one RT, only about 10% of the reaction weight of the precursor can be obtained.

Accordingly, when using such batch-type apparatuses, the productivity of the precursor per batch is very low. Furthermore, because the reaction volume continuously changes, the sphericity of the precursor is also reduced.

[DETAILED DESCRIPTION]

[TECHNICAL PROBLEM]

The present embodiments seek to provide an apparatus and a method for manufacturing a positive electrode active material precursor that can markedly improve productivity while also achieving excellent sphericity.

[TECHNICAL SOLUTION]

An apparatus for manufacturing a positive electrode active material precursor according to one embodiment may include: a reaction unit (100) comprising a first reactor (110), an input pipe (120) configured to supply a raw material into the first reactor, and a first stirring means (130) located at the center inside the first reactor and configured to stir the raw material introduced from the input pipe to perform a coprecipitation reaction; a first connection pipe (300) through which a reaction product generated in the first reactor is discharged; a solid-liquid separation unit (200) comprising a second reactor (210), a second stirring means (230) located at the center inside the second reactor and configured to stir the reaction product introduced from the first connection pipe, and a filtrate discharge section (220) located at an upper portion of the second reactor; and a control unit connected to the reaction unit and the solid-liquid separation unit and configured to control the reaction unit and the solid-liquid separation unit to operate continuously.

The second reactor may comprise a first partition wall (251) installed at a predetermined distance from an inner wall of the second reactor. A lower portion of the first partition wall may be integrally connected to a second partition wall (252) having a conical shape in which a horizontal cross-sectional area increases toward a bottom surface of the second reactor. The second reactor may include a stagnant portion (260) as an outer region partitioned by the first partition wall and the second partition wall, and a flow portion (270) as an inner region. The first connection pipe may extend from an upper sidewall of the first reactor to an upper portion of the flow portion. The first partition wall may be formed along an inner surface of the second reactor, have a height of 0.8 to 1 times the height of the second reactor based on the height of the second reactor, and be installed at a predetermined distance from a bottom surface of the second reactor.

The filtrate discharge section may comprise a filter member (221) disposed between the inner wall of the second reactor and the first partition wall. The filter member may be positioned in a floating state at the upper portion of the second reactor. The filtrate discharge section may comprise a filtrate discharge pipe (222) located in a sidewall of the second reactor. The filtrate discharge pipe may be located at a sidewall at a height of 0.9 to 1 times the total height of the first partition wall and the second partition wall from the bottom surface of the second reactor. The apparatus may further comprise a second connection pipe (400) connected to the second reactor for reintroducing solids separated in the solid-liquid separation unit into the first reactor.

The input pipe (120) may comprise a first input pipe (121) for supplying a metal ion-containing solution, a second input pipe (122) for supplying an alkaline aqueous solution, and a third input pipe (123) for supplying an ammonium ion-containing solution. The apparatus may further comprise a filtrate recovery section (600) connected to the filtrate discharge section for recovering a reaction filtrate separated from the solid-liquid separation unit. The first stirring means may comprise a first shaft and a first impeller, and the first impeller may be located in a region corresponding to 5% to 20% of the volume of the first reactor from the bottom surface of the first reactor. The second stirring means (230) may comprise a second shaft (231) and a second impeller (232), and a lower end portion of the second impeller may be located in a region corresponding to 10% to 20% of the volume of the second reactor from the bottom surface of the second reactor. A volume of the second reactor may be 100% or more based on 100% of the volume of the first reactor.

A method for manufacturing a positive electrode active material precursor according to one embodiment may include: supplying a raw material comprising a metal ion-containing solution, an alkaline aqueous solution, and an ammonium ion-containing solution into a first reactor of a reaction unit; stirring the raw material using a first stirring means to form a reaction product through a coprecipitation reaction; when a reaction solution containing the raw material in the first reactor reaches 100% or more of a reaction volume region of the first reactor, discharging an excess portion of the reaction product into a second reactor of a solid-liquid separation unit through a first connection pipe; and solid-liquid separating the reaction product introduced into the second reactor and removing a filtrate, wherein the step of supplying the raw material and the step of removing the filtrate may be performed continuously.

The step of removing the filtrate may be performed after the reaction product is introduced into the second reactor to 70% or more of the total volume of the second reactor. The step of supplying the raw material and the step of removing the filtrate may be performed to satisfy the following Equation 1:

[Equation 1]

$$\text{Raw material supply amount} \geq \text{Filtrate removal amount.}$$

The step of solid-liquid separating the reaction product introduced into the second reactor and removing the filtrate may be performed through a filter member positioned in a floating state at the upper portion of the second reactor, or through a filtrate discharge pipe connected to the upper portion of the second reactor. In the step of solid-liquid separating the reaction product introduced into the second reactor, solids may settle and be separated to a lower portion of a stagnant portion partitioned by a first partition wall installed at a predetermined distance from an inner wall of the second reactor and a second partition wall integrally connected to a lower portion of the first partition wall. The method may further comprise reintroducing solids obtained in the step of solid-liquid separating the reaction product introduced into the second reactor and removing the filtrate into the first reactor. The step of solid-liquid separating the reaction product introduced into the second reactor and removing the filtrate may comprise stirring the reaction product using a second stirring means located at the center inside the second reactor. A stirring speed using the second stirring means may be slower than or equal to a stirring speed using the first stirring means.

A positive electrode for a lithium secondary battery according to one embodiment may include: a current collector; and a positive electrode active material layer disposed on at least one surface of the current collector and comprising a positive electrode active material manufactured according to one embodiment. A lithium secondary battery according to one embodiment may include the positive electrode.

**[EFFECTS OF THE INVENTION]**

According to the present embodiments, by employing a positive electrode active material precursor manufacturing apparatus including both a reaction unit for producing a reaction product through a coprecipitation reaction and a solid-liquid separation unit for discharging filtrate through solid-liquid separation, and enabling continuous discharge of the filtrate via the solid-liquid separation unit, the productivity of the positive electrode active material precursor can be remarkably improved.

In addition, by reintroducing the solids discharged from the solid-liquid separation unit into the reaction unit and manufacturing the precursor in a continuous process, it becomes possible to readily control the crystal growth plane, thereby producing a highly oriented positive electrode active material precursor.

Furthermore, the positive electrode active material precursor manufactured according to the present embodiments has a uniform particle size and a high degree of sphericity, which is advantageous in improving the physical properties of the positive electrode active material precursor.

# EP 4 670 836 A1

## [BRIEF DESCRIPTION OF THE DRAWINGS]

FIG. 1 is a schematic diagram of an apparatus for manufacturing a positive electrode active material precursor according to one embodiment.

FIG. 2 is a cross-sectional view taken along line A-A' of FIG. 1.

FIG. 3 is an enlarged view of region B in FIG. 1.

FIG. 4 is a schematic diagram of an apparatus for manufacturing a positive electrode active material precursor according to another embodiment.

FIG. 5 is a cross-sectional SEM photograph of a positive electrode active material particle manufactured using a positive electrode active material precursor produced according to the manufacturing method of one embodiment in a single circulation process.

FIG. 6 is a cross-sectional SEM photograph of a positive electrode active material particle manufactured using a positive electrode active material precursor produced according to the manufacturing method of one embodiment in a five-time circulation process.

FIG. 7 is a cross-sectional SEM photograph of a positive electrode active material particle manufactured using a positive electrode active material precursor produced by a batch process.

FIG. 8 is an SEM image of a positive electrode active material particle manufactured using a positive electrode active material precursor produced by a batch process while maintaining a feed rate of 100%.

FIG. 9 is an enlarged SEM image of a single particle measured from FIG. 8.

FIG. 10 is an SEM image of a positive electrode active material particle manufactured using a positive electrode active material precursor produced while maintaining a feed rate of 400% into the reaction unit.

FIG. 11 is an enlarged SEM image of a single particle measured from FIG. 10.

FIG. 12 is an SEM image of a positive electrode active material particle manufactured using a positive electrode active material precursor produced by feeding the raw material into the reaction unit at a feed rate of 100% in the first cycle and at a feed rate of 400% in subsequent cycles.

FIG. 13 is an enlarged SEM image of a single particle measured from FIG. 12.

## [BEST MODE FOR CARRYING OUT THE INVENTION]

The terms such as first, second, and third, and the like, are used to describe various parts, components, regions, layers, and/or sections, but are not limited thereto. These terms are used solely to distinguish one part, component, region, layer, or section from another part, component, region, layer, or section. Thus, a first part, component, region, layer, or section described below may be referred to as a second part, component, region, layer, or section without departing from the scope of the present invention.

The technical terminology used herein is merely for the purpose of referring to particular embodiments and is not intended to limit the present invention. The singular forms used herein are intended to include plural forms as well, unless the context clearly indicates otherwise. The term "comprising" as used in the specification specifies the presence of stated features, regions, integers, steps, operations, elements, and/or components, but does not preclude the presence or addition of one or more other features, regions, integers, steps, operations, elements, and/or components.

When it is stated that a part is "on" or "above" another part, it may be disposed directly on or above the other part, or intervening parts may be present therebetween. In contrast, when it is stated that a part is "directly on" or "directly above" another part, there are no intervening parts therebetween.

Unless otherwise defined, all terms including technical and scientific terms used herein have the same meaning as commonly understood by those of ordinary skill in the art to which this invention pertains. Terms defined in commonly used dictionaries shall be interpreted as having a meaning consistent with the relevant technical literature and the present disclosure, and are not to be interpreted in an idealized or overly formal sense unless specifically defined herein.

Unless otherwise specified, "%" means weight percent, and 1 ppm means 0.0001 weight %.

Hereinafter, embodiments of the present invention will be described in detail to enable those skilled in the art to easily carry out the invention. However, the present invention may be embodied in many different forms and is not limited to the embodiments set forth herein.

Hereinafter, specific embodiments of the present invention will be described in detail as follows.

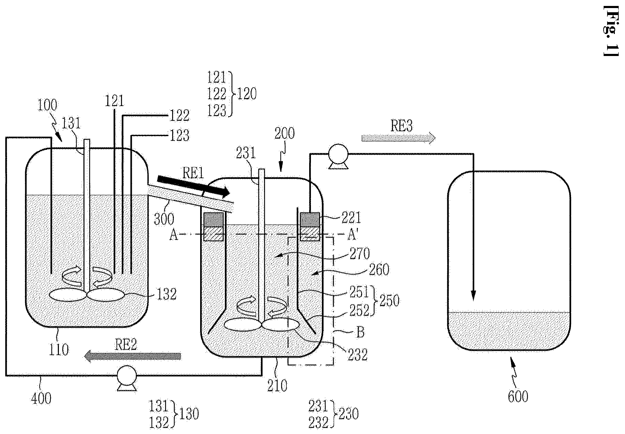

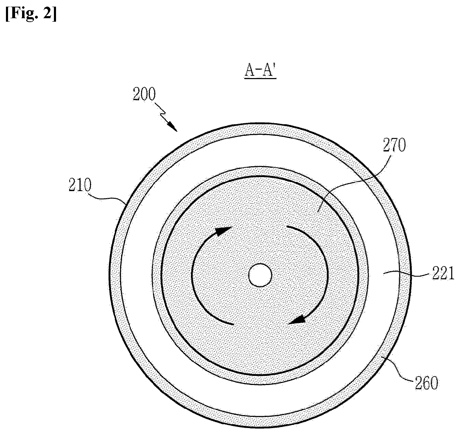

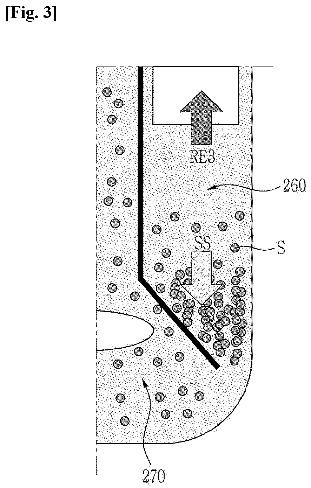

FIG. 1 schematically illustrates an apparatus for manufacturing a positive electrode active material precursor according to one embodiment, FIG. 2 is a cross-sectional view taken along line A-A' of FIG. 1, and FIG. 3 is an enlarged view of region B of FIG. 1.

Referring to FIGS. 1 to 3, the apparatus for manufacturing a positive electrode active material precursor according to one embodiment may include a reaction unit (100), a solid-liquid separation unit (200), a first connection pipe (300), and a control unit.

The reaction unit (100) may include a first reactor (110), an input pipe (120), and a first stirring means (130). The first reactor (110) may have a circular horizontal cross-section and, three-dimensionally, may have a cylindrical shape having the same diameter at its upper and lower portions.

The input pipe (120) supplies raw material into the first reactor (110). Specifically, the input pipe (120) may include a first input pipe (121) for supplying a metal ion-containing solution, a second input pipe (122) for supplying an alkaline aqueous solution, and a third input pipe (123) for supplying an ammonium ion-containing solution.

The first stirring means (130) is located at the center inside the first reactor (110). The first stirring means (130) stirs the raw materials introduced into the first reactor (110) to generate fluid flow and ensure that the reaction materials are uniformly mixed. The stirred raw materials react and are consumed to produce precursor particles and a reaction filtrate, which are present as a homogeneous phase in the first reactor (110).

The first stirring means (130) may include a first shaft (131) and a first impeller (132), and the first impeller (132) may be positioned in a region corresponding to 5% to 20% of the volume of the first reactor (110) from the bottom surface of the first reactor (110). The region corresponding to 5% to 20% of the first reactor (110) volume is where fluid flow can be initiated upon introduction of the raw materials and the start of the reaction. Thus, after the raw materials fill the first reactor (110), vortices induced by components such as the first stirring means (130) initiate the reaction in this region.

In this embodiment, a reaction volume region is defined as a region corresponding to 70% to 90% of the internal volume of the first reactor (110), and more specifically, 80% to 90%. The reaction volume region refers to a region in which raw materials are introduced into the first reactor (110), the reaction proceeds, the amount of reaction product (RE1) increases, and the product is discharged. The reaction volume region undergoes volumetric changes as the raw materials react and is a region affected by the fluid dynamics inside the first reactor (110), which influences the growth of the precursor. Increasing the proportion of the reaction volume region can increase the production yield of the precursor.

The reaction product (RE1), comprising precursor particles and reaction filtrate generated in the first reactor (110), flows into the solid-liquid separation unit (200) through the first connection pipe (300).

The solid-liquid separation unit (200) may include a second reactor (210), a second stirring means (230), and a filtrate discharge section (220). The second reactor (210) may have a circular horizontal cross-section and, three-dimensionally, may have a cylindrical shape having the same diameter at its upper and lower portions. The volume of the second reactor (210) may be 100% or more, specifically 100% to 300%, or more specifically 200% to 300%, based on 100% of the volume of the first reactor (110). When the volume of the second reactor (210) satisfies the above range, an additional reaction volume region, beyond the reaction volume region of the first reactor (110), can be secured, thereby remarkably improving the productivity of the positive electrode active material precursor.

In this embodiment, an additional reaction volume region is defined as a region corresponding to 70% to 90% of the internal volume of the second reactor (210), more specifically 80% to 90%. Conventional batch-type apparatuses typically utilize only about 70% to 80% of the internal reactor volume as a reaction volume region, and only about 10% of the reaction product is produced as precursor, leading to low productivity per batch. In contrast, the present embodiment secures both the reaction volume region of the first reactor (110) and the additional reaction volume region of the second reactor (210), thereby significantly improving productivity. Since the volume of the second reactor (210) can be equal to or greater than that of the first reactor (110), the additional reaction volume region can be further increased, and the productivity of the positive electrode active material precursor can be dramatically improved.

The second reactor (210) may include a first partition wall (251) spaced apart by a predetermined distance from the inner wall of the second reactor (210). The lower portion of the first partition wall (251) may be integrally connected to a conical second partition wall (252) whose horizontal cross-sectional area increases toward the bottom surface of the second reactor (210). Specifically, the first partition wall (251) may have a height of 0.8 to 1 times, or 0.9 to 1 times, the height of the second reactor (210), measured along the inner wall, and may be installed at a predetermined distance from the bottom surface of the second reactor (210). The outer region of the second reactor (210), i.e., the peripheral region defined by the first partition wall (251) and the second partition wall (252), may be defined as a stagnant section (260), and the inner region may be defined as a flow section (270).

The first connection pipe (300) may extend from the upper sidewall of the first reactor (110) to the upper portion of the flow section (270) of the second reactor (210) in the solid-liquid separation unit (200).

The second stirring means (230) is located at the center inside the second reactor (210) and stirs the reaction product (RE1) introduced into the flow section (270) of the second reactor (210) through the first connection pipe (300) to generate fluid flow. The second stirring means (230) may include a second shaft (231) and a second impeller (232), and the lower end of the second impeller (232) may be positioned in a region corresponding to 10% to 20% of the volume of the second reactor (210) from the bottom surface of the second reactor (210). When the position of the second impeller (232) satisfies the above condition, fluid flow within the reaction product (RE1) introduced into the second reactor (210) can be initiated.

The reaction product (RE1) introduced into the flow section (270) is in the form of a slurry containing solids. Specifically, the reaction product (RE1) introduced into the flow section (270) contains solids, i.e., relatively heavy precursor particles, and relatively lighter reaction filtrate. Without homogenization by the second stirring means (230), the solids may settle and cause clogging of the second reactor (210), which can lead to process issues. Therefore, the reaction product homogenized in the flow section (270) by the second stirring means (230) flows into the stagnant section (260), and when the homogenized reaction product occupies a certain volume in the entire second reactor (210), solid-liquid separation occurs in the stagnant section (260), where solids (S) settle (SS) toward the lower portion of the stagnant section (260), and separated filtrate (RE3) is discharged through the filtrate discharge section (220) located at the upper portion of the stagnant section (260).

In this embodiment, the volume of the stagnant section (260) may be 5% or more, specifically 5% to 30%, 10% to 30%, or 20% to 30%, based on the total of the reaction volume region of the first reactor (110) and the additional reaction volume region secured in the second reactor (210). The total reaction volume region may vary depending on the sizes of the first and second reactors, and the stagnant section (260) is formed to satisfy the above range with respect to the total reaction volume region, enabling effective solid-liquid separation.

The solid-liquid separation unit (200) includes the filtrate discharge section (220). The reaction product introduced into the solid-liquid separation unit (200) is separated into solids and reaction filtrate, and the reaction filtrate is discharged to the outside through the filtrate discharge section (220). In this embodiment, since the reaction filtrate is discharged through the filtrate discharge section (220) while simultaneously supplying raw materials into the reaction unit (100) to produce reaction product, an additional reaction volume region can be secured in addition to the aforementioned reaction volume region, thereby dramatically improving productivity of the positive electrode active material precursor per cycle.

The filtrate discharge section (220) may include a filter member (221) located between the inner wall of the second reactor (210) and the first partition wall (251). The filter member (221) may be positioned in a floating state at the upper portion of the second reactor (210), specifically above the reaction filtrate portion of the reaction product transferred from the flow section (270) to the stagnant section (260). The filter member (221) may be, for example, a corrosion-resistant filter, mesh, or membrane filter.

The apparatus for manufacturing a positive electrode active material precursor according to this embodiment may further include a second connection pipe (400) connected to the second reactor (210) and configured to reintroduce solids (RE2) separated in the solid-liquid separation unit into the first reactor (110). The second connection pipe (400) may be located at the bottom surface or the lower sidewall of the second reactor (210). By reintroducing the solids (RE2) separated in the solid-liquid separation unit (200) into the first reactor (110) through the second connection pipe (400), it is possible to gradually control the growth of the precursor particles, thereby obtaining precursor particles having excellent sphericity and crystal orientation.

The apparatus for manufacturing a positive electrode active material precursor according to this embodiment may further include a filtrate recovery section (600) connected to the filtrate discharge section (220) to recover reaction filtrate separated from the solid-liquid separation unit (200).

The apparatus for manufacturing a positive electrode active material precursor may further include a control unit (not shown) connected to the reaction unit (100) and the solid-liquid separation unit (200), and configured to control the reaction unit (100) and the solid-liquid separation unit (200) to operate continuously.

Since continuous solid-liquid separation can be performed through the solid-liquid separation unit (200) in this embodiment, the stirring speed of the reaction unit (100) can be controlled to initially grow the positive electrode active material precursor particles to a small size in the reaction volume region, and then transfer the reaction product to the solid-liquid separation unit (200), where the solids are reintroduced into the reaction unit (100) to gradually grow the precursor particles, thereby securing sphericity and crystal orientation.

Hereinafter, other embodiments will be described with reference to the drawings. In the embodiments described below, the same contents as those of the embodiments described above will be omitted, and differences will be described in detail. In addition, the same reference numerals will be used for the same components as in the previous embodiments.

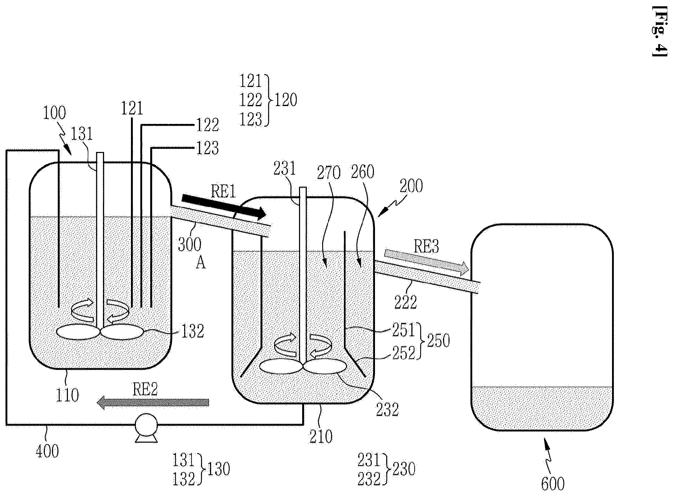

FIG. 4 schematically illustrates an apparatus for manufacturing a positive electrode active material precursor according to another embodiment. In this embodiment, the structure of the filtrate discharge section (220) is different from that of the embodiment described with reference to FIGS. 1 to 3.

In this embodiment, the filtrate discharge section (220) may include a filtrate discharge pipe (222) located on a sidewall of the second reactor (210). The filtrate discharge pipe (222) may be positioned on the sidewall at a height corresponding to 0.9 times to 1 time the total height obtained by summing the heights of the first partition wall (251) and the second partition wall (252) from the bottom surface of the second reactor (210). By including the filtrate discharge pipe (222) in this manner, filtrate (RE3) can be effectively removed, and the amount of filtrate discharged can be appropriately controlled.

Next, a method for manufacturing a positive electrode active material precursor according to one embodiment may comprise: supplying, to a first reactor of a reaction unit, a raw material comprising a metal ion-containing solution, a basic aqueous solution, and an ammonium ion-containing solution; stirring the raw material using a first stirring means to form a reaction product through a co-precipitation reaction; discharging an excess amount of the reaction product to a second reactor of a solid-liquid separation unit through a first connection pipe when a reaction solution comprising the raw material in the first reactor reaches 100% or more of a reaction volume region of the first reactor; and removing a filtrate after performing solid-liquid separation on the reaction product introduced into the second reactor. In this embodiment, the supplying of the raw material and the removing of the filtrate may be performed continuously.

First, the step of supplying to the first reactor of the reaction unit a raw material comprising a metal ion-containing solution, a basic aqueous solution, and an ammonium ion-containing solution is performed. The metal ion-containing solution may include, for example, a cation of one or more metals selected from nickel (Ni), manganese (Mn), cobalt (Co), aluminum (Al), and various doping elements. The metal ion-containing solution is not particularly limited so long as it can be dissolved in water, and may include acetates, nitrates, sulfates, halides, sulfides, hydroxides, oxides, or oxyhydroxides of the metals. For example, cobalt (Co) may be included in the form of $Co(OH)_2$, $CoOOH$, $Co(OCOCH_3)_2 \cdot 4H_2O$, $Co(NO_3)_2 \cdot 6H_2O$, $CoSO_4$, or $Co(SO_4)_2 \cdot 7H_2O$, and one or a combination of two or more thereof may be used. Nickel (Ni) may be included in the form of $Ni(OH)_2$, $NiO$, $NiOOH$, $NiCO_3 \cdot 2Ni(OH)_2 \cdot 4H_2O$, $NiC_2O_2 \cdot 2H_2O$, $Ni(NO_3)_2 \cdot 6H_2O$, $NiSO_4$, $NiSO_4 \cdot 6H_2O$, nickel fatty acid salts, or nickel halides, and one or a combination of two or more thereof may be used. Manganese (Mn) may be included in the form of manganese oxides such as $Mn_2O_3$, $MnO_2$, and $Mn_3O_4$; manganese salts such as $MnCO_3$, $Mn(NO_3)_2$, $MnSO_4$, manganese acetate, manganese dicarboxylate salts, manganese citrate, and manganese fatty acid salts; oxyhydroxides; or manganese chloride, and one or a combination of two or more thereof may be used.

The basic aqueous solution may include one or more selected from hydrates of alkali metals, hydroxides of alkali metals, hydrates of alkaline earth metals, and hydroxides of alkaline earth metals. For example, the basic aqueous solution may include $NaOH$, $KOH$, or $Ca(OH)_2$, and the solvent may be water or a mixture of water and an organic solvent miscible with water (specifically, an alcohol, etc.).

The ammonium ion-containing solution may include one or more selected from $NH_4OH$, $(NH_4)_2SO_4$, $NH_4NO_3$, $NH_4Cl$, $CH_3COONH_4$, and $NH_4CO_3$. The solvent may be water or a mixture of water and an organic solvent miscible with water (specifically, an alcohol, etc.).

Next, when the reaction solution containing the raw material in the first reactor reaches 100% or more of the reaction volume region of the first reactor, the excess amount is discharged to the second reactor of the solid-liquid separation unit through the first connection pipe. Thereafter, the step of removing a filtrate after solid-liquid separation of the reaction product introduced into the second reactor is performed. The filtrate removing step may be performed after the reaction product is introduced to 70% or more, specifically 70% to 90%, of the total volume of the second reactor. By removing the filtrate when the reaction product reaches at least 70% of the total volume of the second reactor, the reaction product introduced into the stagnant region is not in motion, allowing the solid content to naturally settle to the lower portion of the second reactor, thereby facilitating solid-liquid separation.

The step of removing a filtrate after solid-liquid separation of the reaction product introduced into the second reactor may include stirring the reaction product using a second stirring means located at the center of the second reactor. By stirring the reaction product introduced into the flow region using the second stirring means, the reaction product is homogenized, and a portion of the homogenized reaction product is exchanged at the lower end of the stagnant region. In this case, the stirring speed using the second stirring means may be slower than or equal to the stirring speed using the first stirring means. The flow of fluid generated in the flow region of the second reactor homogenizes the reaction product, and a portion of the homogenized reaction product is exchanged at the lower end of the stagnant region. Most of the stagnant region may remain unaffected by the flow generated in the flow region.

Specifically, in the process of performing solid-liquid separation on the reaction product introduced into the second reactor, the solid content may settle and be separated into the lower portion of the stagnant region defined by the first partition wall disposed at a predetermined distance from the inner wall of the second reactor and the second partition wall integrally connected to the lower portion of the first partition wall. The step of removing a filtrate after solid-liquid separation of the reaction product introduced into the second reactor may be performed through a filter member floating at the upper portion of the second reactor or through a filtrate discharge pipe connected to the upper portion of the second reactor.

The step of supplying the raw material and the step of removing the filtrate may be performed to satisfy the following formula (1):

[Formula 1]

$$\text{Raw material supply amount} \geq \text{Filtrate removal amount}$$

Since the raw material supply amount is greater than or equal to the filtrate removal amount, manufacturing of the positive electrode active material precursor can be carried out in a continuous process according to the present embodiment. In this case, the raw material supply amount refers to the total amount of all supplied raw materials.

Meanwhile, the method may further comprise reintroducing, into the first reactor, the solid content separated in the step of removing a filtrate after solid-liquid separation of the reaction product introduced into the second reactor. By removing the reaction filtrate separated in the solid-liquid separation unit and reintroducing the solid content into the reaction unit, the positive electrode active material precursor particles can be gradually grown, thereby securing sphericity and crystallographic orientation. In addition, the production amount of the positive electrode active material precursor can be dramatically increased.

In another embodiment, there is provided a positive electrode comprising a current collector, and a positive electrode active material layer disposed on one surface of the current collector, the positive electrode active material layer comprising a positive electrode active material manufactured using the positive electrode active material precursor produced according to the embodiment described above. The method of manufacturing the positive electrode active material using the positive electrode active material precursor may be carried out according to a conventional positive electrode active material manufacturing method.

The current collector may be, for example, stainless steel, aluminum, nickel, titanium, baked carbon, or aluminum or stainless steel whose surface has been surface-treated with carbon, nickel, titanium, silver, or the like.

The positive electrode active material layer may further comprise a binder and a conductive agent. The binder serves to improve adhesion between positive electrode active material particles and adhesion between the positive electrode active material and the positive electrode current collector. Specific examples include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated EPDM, styrene-butadiene rubber (SBR), fluororubber, or various copolymers thereof, and one or a combination of two or more thereof may be used, but the binder is not limited thereto. The binder may be included in an amount of from 1 wt% to 30 wt% based on the total weight of the positive electrode active material layer.

The conductive agent is used to impart electrical conductivity to the electrode and may be any material that exhibits electronic conductivity without causing chemical change in the battery in which it is used, without particular limitation. Specific examples include graphite such as natural graphite or artificial graphite; carbon materials such as carbon black, acetylene black, Ketjen black, channel black, furnace black, lamp black, thermal black, and carbon fibers; metal powders or metal fibers such as copper, nickel, aluminum, and silver; conductive whiskers such as zinc oxide whiskers and potassium titanate whiskers; conductive metal oxides such as titanium oxide; or conductive polymers such as polyphenylene derivatives, and one or a combination of two or more thereof may be used, but the conductive agent is not limited thereto. The conductive agent may be included in an amount of from 1 wt% to 30 wt% based on the total weight of the positive electrode active material layer.

The positive electrode may be manufactured according to a conventional positive electrode manufacturing method except for the use of the above-described positive electrode active material. Specifically, the positive electrode may be manufactured by coating, onto the positive electrode current collector, a composition for forming a positive electrode active material layer comprising the above-described positive electrode active material and, optionally, the binder, conductive agent, and a solvent, followed by drying and rolling. In this case, the types and amounts of the positive electrode active material, binder, and conductive agent are as described above.

The solvent may be any solvent commonly used in the relevant technical field, and examples include dimethyl sulfoxide (DMSO), isopropyl alcohol, N-methyl-2-pyrrolidone (NMP), acetone, or water, and one or a combination of two or more thereof may be used. The amount of solvent used may be sufficient to dissolve or disperse the positive electrode active material, conductive agent, and binder, considering the coating thickness and manufacturing yield of the slurry, and to provide a viscosity capable of achieving excellent coating thickness uniformity during coating for positive electrode manufacture.

Alternatively, the positive electrode may be manufactured by casting the composition for forming a positive electrode active material layer onto a separate support, peeling a film obtained therefrom from the support, and laminating the film onto the positive electrode current collector.

In another embodiment, there is provided a lithium secondary battery comprising the above-described positive electrode. The lithium secondary battery may specifically comprise a positive electrode, a negative electrode disposed to face the positive electrode, a separator interposed between the positive electrode and the negative electrode, and an electrolyte, wherein the positive electrode is as described above. The lithium secondary battery may further optionally comprise a battery case for accommodating an electrode assembly including the positive electrode, the negative electrode, and the separator, and a sealing member for sealing the battery case.

In the lithium secondary battery, the negative electrode may comprise a negative electrode current collector and a negative electrode active material layer disposed on the negative electrode current collector. The negative electrode current collector is not particularly limited so long as it has high conductivity without causing chemical change in the battery, and may be, for example, copper, stainless steel, aluminum, nickel, titanium, baked carbon, copper or stainless steel whose surface has been surface-treated with carbon, nickel, titanium, silver, or the like, or an aluminum-cadmium alloy. The negative electrode current collector may generally have a thickness of from 3 $\mu$m to 500 $\mu$m and, similar to the positive electrode current collector, its surface may be formed with fine irregularities to enhance adhesion to the negative electrode active material. For example, it may be used in the form of a film, sheet, foil, net, porous body, foam, or nonwoven fabric.

The negative electrode active material layer may comprise a negative electrode active material and, optionally, a binder and a conductive agent. The negative electrode active material layer may be formed, for example, by coating a composition for forming a negative electrode active material layer comprising the negative electrode active material and, optionally, the binder and the conductive agent, onto the negative electrode current collector, followed by drying, or by casting the composition for forming a negative electrode active material layer onto a separate support, peeling a film obtained therefrom from the support, and laminating the film onto the negative electrode current collector.

The negative electrode active material may be a compound capable of reversible intercalation and deintercalation of lithium. Specific examples include carbonaceous materials such as artificial graphite, natural graphite, graphitized carbon fibers, and amorphous carbon; metallic compounds capable of alloying with lithium, such as Si, Al, Sn, Pb, Zn, Bi, In, Mg, Ga, Cd, silicon alloys, tin alloys, or aluminum alloys; metal oxides capable of doping and dedoping lithium, such as $SiO_\beta$ $(0 < \beta < 2)$, $SnO_2$, vanadium oxides, and lithium vanadium oxides; or composites comprising the metallic compound and the carbonaceous material, such as Si-C composites or Sn-C composites, and one or a combination of two or more thereof may be used. A thin film of metallic lithium may also be used as the negative electrode active material. The carbonaceous material may be either low-crystalline carbon or highly crystalline carbon. Representative examples of low-crystalline carbon include soft carbon and hard carbon, and representative examples of highly crystalline carbon include high-temperature sintered carbons such as natural graphite or artificial graphite in amorphous, plate-like, flake-like, spherical, or fibrous form, Kish graphite, pyrolytic carbon, mesophase pitch-based carbon fiber, mesocarbon microbeads, mesophase pitches, and petroleum or coal tar pitch-derived cokes.

The binder and conductive agent may be the same as those described above for the positive electrode.

Depending on the type of lithium secondary battery, a separator may be disposed between the positive electrode and the negative electrode. Such a separator may be a polyethylene, polypropylene, or polyvinylidene fluoride membrane, or a multilayer membrane of two or more layers thereof, and may include mixed multilayer membranes such as a polyethylene/polypropylene bilayer separator, a polyethylene/polypropylene/polyethylene trilayer separator, or a polypropylene/polyethylene/polypropylene trilayer separator.

The electrolyte of the lithium secondary battery may include, but is not limited to, an organic liquid electrolyte, an inorganic liquid electrolyte, a solid polymer electrolyte, a gel polymer electrolyte, a solid inorganic electrolyte, or a molten inorganic electrolyte usable in the manufacture of lithium secondary batteries. Specifically, the organic liquid electrolyte may comprise an organic solvent and a lithium salt.

The organic solvent is not particularly limited so long as it serves as a medium through which ions involved in the electrochemical reactions of the battery can migrate. Specific examples include ester-based solvents such as methyl acetate, ethyl acetate, $\gamma$-butyrolactone, and $\varepsilon$-caprolactone; ether-based solvents such as dibutyl ether and tetrahydrofuran; ketone-based solvents such as cyclohexanone; aromatic hydrocarbon-based solvents such as benzene and fluorobenzene; carbonate-based solvents such as dimethyl carbonate (DMC), diethyl carbonate (DEC), methyl ethyl carbonate (MEC), ethyl methyl carbonate (EMC), ethylene carbonate (EC), and propylene carbonate (PC); alcohol-based solvents such as ethyl alcohol and isopropyl alcohol; nitriles such as R-CN (where R is a $C_2$-$C_{20}$ linear, branched, or cyclic hydrocarbon group which may include a double bond, an aromatic ring, or an ether bond); amides such as dimethylformamide; dioxolanes such as 1,3-dioxolane; and sulfolanes, among others. Carbonate-based solvents are preferred, and more preferably a mixture of a cyclic carbonate having high ionic conductivity and high dielectric constant (e.g., ethylene carbonate or propylene carbonate) with a low-viscosity linear carbonate compound (e.g., ethyl methyl carbonate, dimethyl carbonate, or diethyl carbonate). The cyclic carbonate and the linear carbonate may preferably be mixed in a volume ratio of about 1:1 to about 1:9 to achieve excellent electrolyte performance.

The lithium salt is not particularly limited so long as it can provide lithium ions usable in lithium secondary batteries. Specific examples include $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, and $LiB(C_2O_4)_2$. The concentration of the lithium salt is preferably in the range of 0.1 M to 2.0 M. When the lithium salt concentration is within this range, the electrolyte may have appropriate conductivity and viscosity, thereby exhibiting excellent electrolyte performance and enabling effective lithium-ion transport.

As described above, the lithium secondary battery including the positive electrode active material according to the present invention can stably exhibit excellent discharge capacity, output characteristics, and capacity retention, and is thus useful in portable devices such as mobile phones, notebook computers, and digital cameras, as well as in the field of electric vehicles such as hybrid electric vehicles (HEVs).

**[MODE FOR CARRYING OUT THE INVENTION]**

Hereinafter, exemplary embodiments of the present invention will be described in detail. However, it is to be understood that the following description is merely illustrative, and the present invention is not limited thereto but is defined only by the scope of the claims set forth hereinafter.

**EXAMPLES**

**Measurement of Particle Properties**

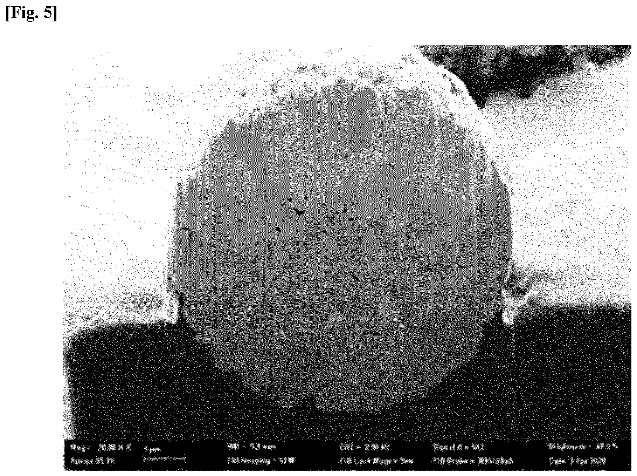

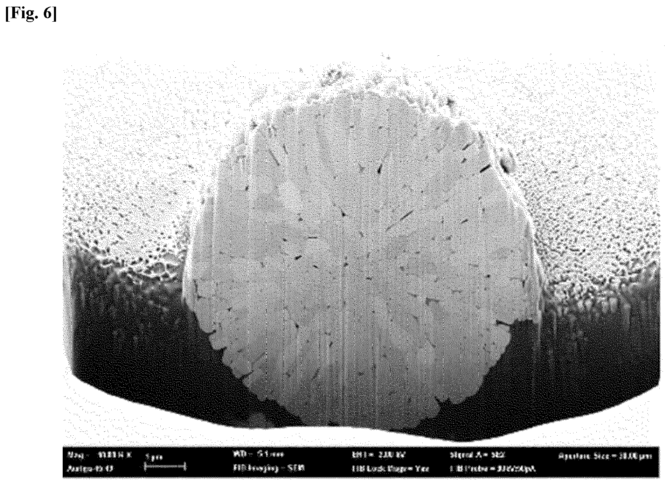

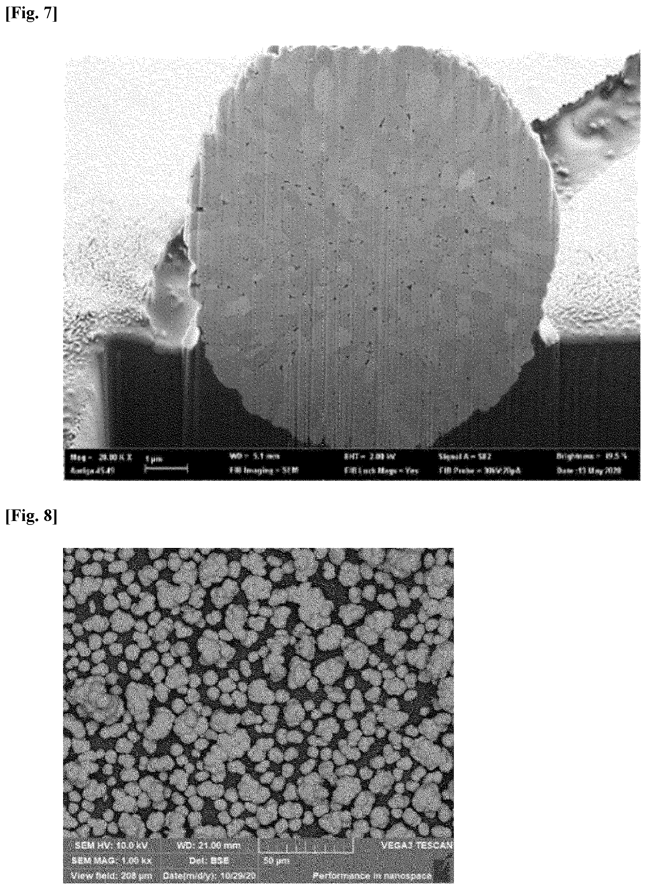

FIGS. 5 and 6 are cross-sectional SEM photographs of positive electrode active material particles prepared using a positive electrode active material precursor manufactured by the apparatus according to an embodiment of the present invention. In FIG. 5, the process was performed as a single circulation process in which the reaction product was generated in the reaction unit, transferred to the solid-liquid separation unit, and the separated solid component, i.e., the precursor, was collected. In FIG. 6, the precursor was prepared through five circulation processes. FIG. 7 is a cross-sectional SEM photograph of positive electrode active material particles prepared using a positive electrode active material precursor manufactured by a batch process. Referring to FIGS. 5 to 7, the positive electrode active material particles shown in FIGS. 5 and 6 exhibited superior crystal orientation compared to those shown in FIG. 7.

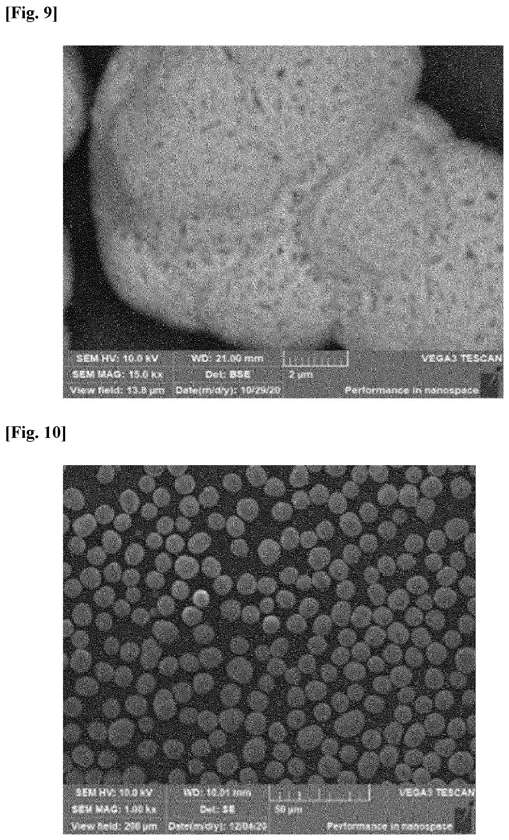

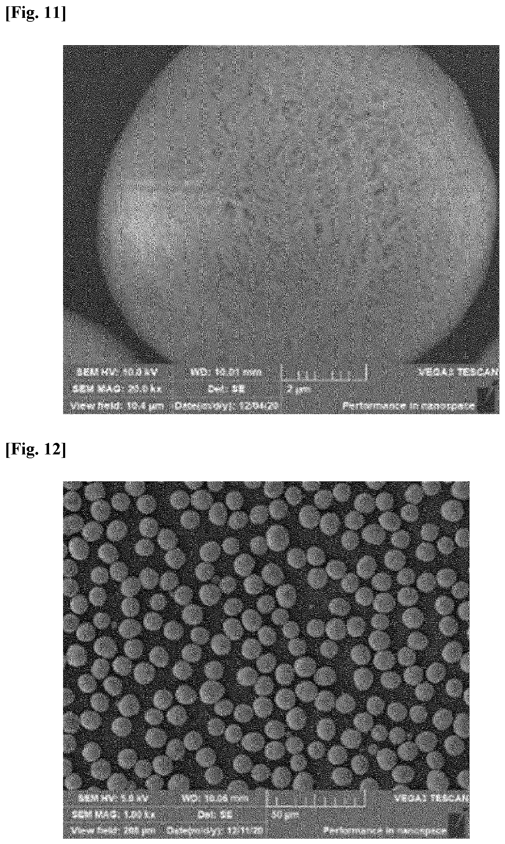

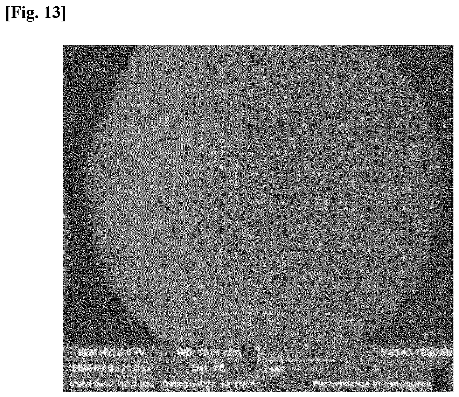

FIG. 8 is an SEM image of positive electrode active material particles prepared using a positive electrode active material precursor manufactured by a batch process while maintaining a feed rate of 100%, and FIG. 9 is an enlarged SEM image of a single particle from FIG. 8. FIGS. 10 to 13 are SEM images of positive electrode active materials prepared using positive electrode active material precursors manufactured by the method according to an embodiment of the present invention. Specifically, FIG. 10 is an SEM image of positive electrode active material particles prepared using a precursor manufactured while maintaining a feed rate of 400% into the reaction unit. FIG. 11 is an enlarged SEM image of a single particle from FIG. 10. FIG. 12 is an SEM image of positive electrode active material particles prepared using a precursor manufactured by feeding raw material into the reaction unit at a feed rate of 100% in the first cycle and at a feed rate of 400% in the second and subsequent cycles. FIG. 13 is an enlarged SEM image of a single particle from FIG. 12. Referring to FIGS. 10 to 13, it was confirmed that the sphericity of the particles was superior compared to those shown in FIGS. 9 and 10.

**Precursor Synthesis Results**

Reaction and solid-liquid separation units were prepared using 5 L glass reactors. Sixty liters of reaction mixture (containing 10% solids) was charged to verify the applicability of solid-liquid separation and the operational range enabling such separation. When a feed rate condition of 1RT for 5 hours was applied, solid-liquid separation was confirmed to be possible up to a level of approximately 5RT (corresponding to a solids content of about 50%). Accordingly, it was confirmed that the unit batch production capacity could be increased by at least five times through continuous solid-liquid separation.

The present invention is not limited to the foregoing embodiments, and various modifications and changes may be made without departing from the scope of the technical idea or essential characteristics of the invention by those skilled in the art to which the invention pertains. Therefore, the above-described embodiments are to be understood as illustrative in all respects and not restrictive.

**Explanation of Reference Numerals**

> 100: Reaction unit
> 200: Solid-liquid separation unit
> 110: First reactor
> 120: Input pipe
> 130: First stirring means
> 300: First connecting pipe
> 210: Second reactor
> 220: Filtrate discharge section
> 230: Second stirring means
> 251: First partition wall
> 252: Second partition wall
> 260: Stagnant portion

270: Flow portion

## Claims

1. An apparatus for manufacturing a positive electrode active material precursor, comprising:

   a reaction unit including a first reactor and an input pipe for supplying a raw material into the first reactor, and a first stirring means located at the center inside the first reactor for stirring the raw material introduced from the input pipe to perform a coprecipitation reaction;
   a first connection pipe through which a reaction product generated in the first reactor is discharged;
   a solid-liquid separation unit including a second reactor, a second stirring means located at the center inside the second reactor for stirring the reaction product introduced from the first connection pipe, and a filtrate discharge section located at an upper portion of the second reactor; and
   a control unit connected to the reaction unit and the solid-liquid separation unit and configured to control the reaction unit and the solid-liquid separation unit to operate continuously.

2. The apparatus for manufacturing a positive electrode active material precursor of claim 1, wherein the second reactor comprises a first partition wall installed at a predetermined distance from an inner wall of the second reactor.

3. The apparatus for manufacturing a positive electrode active material precursor of claim 2, wherein a lower portion of the first partition wall is integrally connected to a second partition wall having a conical shape in which a horizontal cross-sectional area increases toward a bottom surface of the second reactor.

4. The apparatus for manufacturing a positive electrode active material precursor of claim 3, wherein the second reactor comprises a stagnant portion as an outer region partitioned by the first partition wall and the second partition wall, and a flow portion as an inner region.

5. The apparatus for manufacturing a positive electrode active material precursor of claim 1, wherein the first connection pipe extends from an upper sidewall of the first reactor to an upper portion of the flow portion.

6. The apparatus for manufacturing a positive electrode active material precursor of claim 1, wherein the first partition wall is formed along an inner surface of the second reactor, has a height of 0.8 to 1 times the height of the second reactor based on the height of the second reactor, and is installed at a predetermined distance from a bottom surface of the second reactor.

7. The apparatus for manufacturing a positive electrode active material precursor of claim 1, wherein the filtrate discharge section comprises a filter member disposed between an inner wall of the second reactor and the first partition wall.

8. The apparatus for manufacturing a positive electrode active material precursor of claim 7, wherein the filter member is positioned in a floating state at an upper portion of the second reactor.

9. The apparatus for manufacturing a positive electrode active material precursor of claim 3, wherein the filtrate discharge section comprises a filtrate discharge pipe located in a sidewall of the second reactor.

10. The apparatus for manufacturing a positive electrode active material precursor of claim 9, wherein the filtrate discharge pipe is located at a sidewall at a height of 0.9 to 1 times the total height of the first partition wall and the second partition wall from a bottom surface of the second reactor.

11. The apparatus for manufacturing a positive electrode active material precursor of claim 1, further comprising a second connection pipe connected to the second reactor for reintroducing solids separated in the solid-liquid separation unit into the first reactor.

12. The apparatus for manufacturing a positive electrode active material precursor of claim 1, wherein the input pipe comprises: a first input pipe for supplying a metal ion-containing solution; a second input pipe for supplying an alkaline aqueous solution; and a third input pipe for supplying an ammonium ion-containing solution.

13. The apparatus for manufacturing a positive electrode active material precursor of claim 1, further comprising a filtrate recovery section connected to the filtrate discharge section for recovering a reaction filtrate separated from the solid-liquid separation unit.

14. The apparatus for manufacturing a positive electrode active material precursor of claim 1, wherein the first stirring means comprises a first shaft and a first impeller, and the first impeller is located in a region corresponding to 5% to 20% of the volume of the first reactor from a bottom surface of the first reactor.

15. The apparatus for manufacturing a positive electrode active material precursor of claim 1, wherein the second stirring means comprises a second shaft and a second impeller, and a lower end portion of the second impeller is located in a region corresponding to 10% to 20% of the volume of the second reactor from a bottom surface of the second reactor.

16. The apparatus for manufacturing a positive electrode active material precursor of claim 1, wherein a volume of the second reactor is 100% or more based on 100% of the volume of the first reactor.

17. A method for manufacturing a positive electrode active material precursor, comprising:

    supplying a raw material comprising a metal ion-containing solution, an alkaline aqueous solution, and an ammonium ion-containing solution into a first reactor of a reaction unit;
    stirring the raw material using a first stirring means to form a reaction product through a coprecipitation reaction;
    discharging an excess portion of the reaction product into a second reactor of a solid-liquid separation unit through a first connection pipe, when a reaction solution containing the raw material in the first reactor reaches 100% or more of a reaction volume region of the first reactor; and
    solid-liquid separating the reaction product introduced into the second reactor and removing a filtrate,
    wherein the step of supplying the raw material and the step of removing the filtrate are performed continuously.

18. The method for manufacturing a positive electrode active material precursor of claim 17, wherein the step of removing the filtrate is performed after the reaction product is introduced into the second reactor to 70% or more of the total volume of the second reactor.

19. The method for manufacturing a positive electrode active material precursor of claim 17, wherein the step of supplying the raw material and the step of removing the filtrate are performed to satisfy the following Equation 1:

[Equation 1]

Raw material supply amount $\geq$ Filtrate removal amount.

20. The method for manufacturing a positive electrode active material precursor of claim 17, wherein the step of solid-liquid separating the reaction product introduced into the second reactor and removing the filtrate is performed through a filter member positioned in a floating state at an upper portion of the second reactor, or through a filtrate discharge pipe connected to the upper portion of the second reactor.

21. The method for manufacturing a positive electrode active material precursor of claim 17, wherein, in the step of solid-liquid separating the reaction product introduced into the second reactor, solids settle and are separated to a lower portion of a stagnant portion partitioned by a first partition wall installed at a predetermined distance from an inner wall of the second reactor and a second partition wall integrally connected to a lower portion of the first partition wall.

22. The method for manufacturing a positive electrode active material precursor of claim 17, further comprising reintroducing solids obtained in the step of solid-liquid separating the reaction product introduced into the second reactor and removing the filtrate into the first reactor.

23. The method for manufacturing a positive electrode active material precursor of claim 17, wherein the step of solid-liquid separating the reaction product introduced into the second reactor and removing the filtrate comprises stirring the reaction product using a second stirring means located at the center inside the second reactor.

24. The method for manufacturing a positive electrode active material precursor of claim 23, wherein a stirring speed using the second stirring means is slower than or equal to a stirring speed using the first stirring means.

25. A positive electrode for a lithium secondary battery, comprising: a current collector; and a positive electrode active material layer disposed on at least one surface of the current collector and comprising a positive electrode active material manufactured according to any one of claims 17 to 23.

26. A lithium secondary battery comprising the positive electrode of claim 25.

[Fig. 1]

[Fig. 2]

[Fig. 3]

[Fig. 4]

[Fig. 5]

[Fig. 6]

[Fig. 7]

[Fig. 8]

[Fig. 9]

[Fig. 10]

[Fig. 11]

[Fig. 12]

[Fig. 13]

## INTERNATIONAL SEARCH REPORT

| | International application No. |
|---|---|
| | **PCT/KR2024/002238** |

### A. CLASSIFICATION OF SUBJECT MATTER

**B01J 19/00**(2006.01)i; **B01J 19/18**(2006.01)i; **C01G 53/00**(2006.01)i; **H01M 4/525**(2010.01)i; **H01M 4/131**(2010.01)i; **H01M 4/02**(2006.01)i

According to International Patent Classification (IPC) or to both national classification and IPC

### B. FIELDS SEARCHED

Minimum documentation searched (classification system followed by classification symbols)

B01J 19/00(2006.01); B01J 8/00(2006.01); B01J 8/14(2006.01); H01M 4/505(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 반응기(reactor), 제조장치(apparatus), 교반기(agitator), 양극활물질(anodic active material), 전구체(precursor), 리튬이차전지(lithium secondary battery), 고액분리(liquid-solid separation)

### C. DOCUMENTS CONSIDERED TO BE RELEVANT

| Category* | Citation of document, with indication, where appropriate, of the relevant passages | Relevant to claim No. |
|---|---|---|
| Y | KR 10-2022-0159228 A (ECOPRO MATERIALS, CO., LTD.) 02 December 2022 (2022-12-02) See claims 1, 2 and 4, paragraphs [0027], [0034]-[0056] and [0063], and figure 3. | 1,5,7,8,12,14-16 |
| A | | 2-4,6,9-11,13,17-26 |
| Y | KR 10-2022-0068842 A (ECOPRO MATERIALS, CO., LTD.) 26 May 2022 (2022-05-26) See paragraphs [0025], [0036] and [0041], and figure 1. | 1,5,7,8,12,14-16 |
| A | KR 10-2018-0130241 A (POSCO et al.) 07 December 2018 (2018-12-07) See claims 1-21. | 1-26 |
| A | KR 10-2014-0107749 A (JEIO CO., LTD.) 05 September 2014 (2014-09-05) See claims 1-8. | 1-26 |
| A | KR 10-2022-0053064 A (TST INTERNATIONAL) 29 April 2022 (2022-04-29) See claims 1-5. | 1-26 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **05 June 2024** | **05 June 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/002238**

| Patent document cited in search report | | | Publication date (day/month/year) | Patent family member(s) | | | Publication date (day/month/year) |
|---|---|---|---|---|---|---|---|
| KR | 10-2022-0159228 | A | 02 December 2022 | None | | | |
| KR | 10-2022-0068842 | A | 26 May 2022 | KR | 10-2474563 | B1 | 06 December 2022 |
| KR | 10-2018-0130241 | A | 07 December 2018 | CN | 110678254 | A | 10 January 2020 |
| | | | | CN | 110678254 | B | 07 December 2021 |
| | | | | EP | 3632532 | A1 | 08 April 2020 |
| | | | | JP | 2020-522374 | A | 30 July 2020 |
| | | | | JP | 7018077 | B2 | 09 February 2022 |
| | | | | KR | 10-1967979 | B1 | 10 April 2019 |
| | | | | US | 11623195 | B2 | 11 April 2023 |
| | | | | US | 2020-0078747 | A1 | 12 March 2020 |
| | | | | WO | 2018-221822 | A1 | 06 December 2018 |
| KR | 10-2014-0107749 | A | 05 September 2014 | KR | 10-1526882 | B1 | 09 June 2015 |
| KR | 10-2022-0053064 | A | 29 April 2022 | KR | 10-2444971 | B1 | 22 September 2022 |

Form PCT/ISA/210 (patent family annex) (July 2022)